# DEMANDE DE BREVET EUROPEEN

(11) **EP 4 794 252 A1**
(43) Date de publication de la demande: **19.08.2026**
(21) Numéro de dépôt: 26157890.0
(22) Date de dépôt: 11.02.2026
(51) Int. Cl.: H04L 9/00, H04L 9/06

(54) **OPERATION DE DERIVATION DE CLE**

(30) Priorité: 18.02.2025 FR 2501657
(71) Demandeur: STMicroelectronics International N.V., 1228 Plan-les-Ouates, Geneva (CH)
(72) Inventeur: CORNESSE, Christian, 13140 MIRAMAS (FR); LINGE, Yanis, 13710 FUVEAU (FR)
(74) Mandataire: Cabinet Beaumont

(57) **Abrégé**

La présente description concerne un procédé de mise en oeuvre d'une opération de dérivation (400) de clé d'un algorithme de chiffrement adaptée à recevoir une première clé et à fournir une deuxième clé, lesdites premières et deuxièmes clés comprenant chacune un nombre N de bytes disposés sous forme matricielle, dans laquelle des premiers bytes d'une ligne de bytes d'un premier rang de ladite deuxième clé est calculée en utilisant :
- des deuxièmes bytes d'une ligne de bytes du premier rang de ladite première clé ; et
- un seul troisième byte d'une ligne d'un deuxième rang, différent du premier rang, de ladite première clé.

## Description

### Domaine technique

La présente description concerne de façon générale les systèmes et dispositifs électroniques, et la gestion de données au sein de systèmes et dispositifs électroniques. La présente description se rapporte plus particulièrement au chiffrement de données au sein d'un système ou dispositif électronique, et à l'utilisation d'un algorithme de chiffrement. Plus précisément, il s'agit ici de la mise en oeuvre d'une opération de dérivation d'un algorithme de chiffrement.

### Technique antérieure

Les algorithmes de chiffrement de données sont très communément utilisés pour traiter des données sensibles ou secrètes.

Bien qu'un algorithme de chiffrement permette de cacher des données sensibles ou secrètes, la mise en oeuvre de cet algorithme elle-même peut ne pas être sécurisée. En effet, différents types d'attaques sont connus, et peuvent être mises en oeuvre pendant l'application d'un algorithme de chiffrement.

Il serait souhaitable de pouvoir améliorer, au moins en partie, certains aspects des mises en oeuvre d'algorithmes de chiffrement.

### Résumé de l'invention

Il existe un besoin pour une mise en oeuvre d'algorithme de chiffrement plus sécurisée.

Il existe un besoin pour une mise en oeuvre d'algorithme de chiffrement de type Advanced Encryption Standard (AES) plus sécurisée.

Il existe un besoin pour une mise en oeuvre d'une opération de dérivation de clés d'un algorithme de chiffrement plus sécurisée.

Il existe un besoin pour une mise en oeuvre d'une opération de dérivation de clés d'un algorithme de chiffrement de type Advanced Encryption Standard (AES) plus sécurisée.

Il existe un besoin pour des opérations de dérivation de clés dont la mise en oeuvre est robuste face aux attaques de type attaques par canaux cachés et attaques par injection de faute.

Un mode de réalisation pallie tout ou partie des inconvénients des algorithmes de chiffrement connus.

Un mode de réalisation pallie tout ou partie des inconvénients des mises en oeuvre connues d'opération de dérivation de clés.

Un mode de réalisation pallie tout ou partie des inconvénients des algorithmes de chiffrement connus de type AES.

Un mode de réalisation pallie tout ou partie des inconvénients des mises en oeuvre connues d'opération de dérivation de clés d'algorithmes de chiffrement connus de type AES.

Un mode de réalisation prévoit une mise en oeuvre d'une opération de dérivation robuste face aux attaques de types attaques par canaux cachés et attaques par injection de faute.

Un mode de réalisation prévoit une mise en oeuvre d'un algorithme de chiffrement robuste face aux attaques de types attaques par canaux cachés et attaques par injection de faute.

Un mode de réalisation prévoit un procédé de mise en oeuvre d'une opération de dérivation de clé d'un algorithme de chiffrement adaptée à recevoir une première clé et à fournir une deuxième clé, lesdites premières et deuxièmes clés comprenant chacune un nombre N de bytes disposés sous forme matricielle, dans laquelle des premiers bytes d'une ligne de bytes d'un premier rang de ladite deuxième clé est calculée en utilisant :
- des deuxièmes bytes d'une ligne de bytes du premier rang de ladite première clé ; et
- un seul troisième byte d'une ligne d'un deuxième rang, différent du premier rang, de ladite première clé.

Une autre mode de réalisation prévoit un dispositif de mise en oeuvre du procédé de mise en oeuvre d'une opération de dérivation de clé d'un algorithme de chiffrement adaptée à recevoir une première clé et à fournir une deuxième clé, lesdites premières et deuxièmes clés comprenant chacune un nombre N de bytes disposés sous forme matricielle, dans laquelle des premiers bytes d'une ligne de bytes d'un premier rang de ladite deuxième clé est calculée en utilisant :
- des deuxièmes bytes d'une ligne de bytes du premier rang de ladite première clé ; et
- un seul troisième byte d'une ligne d'un deuxième rang, différent du premier rang, de ladite première clé.

Selon un mode de réalisation, ledit algorithme de chiffrement de données est de type Advanced Encryption Standard.

Selon un mode de réalisation, ledit troisième byte est le dernier byte de la ligne de byte du premier rang incrémenté de un de ladite première clé.

Selon un mode de réalisation, chacun desdits premiers bytes est obtenu en appliquant une première fonction logique de type OU EXCLUSIF à un ou plusieurs desdits deuxièmes bytes, à un quatrième byte dépendant dudit troisième byte, et à un cinquième byte.

Selon un mode de réalisation, ledit quatrième byte est obtenu en appliquant une deuxième fonction de substitution.

Selon un mode de réalisation, ledit cinquième byte est un byte constant de rang.

Selon un mode de réalisation, chacun desdits premiers bytes est obtenu en appliquant ladite première fonction à un même nombre de bytes.

Selon un mode de réalisation, chacun desdits premiers bytes est obtenu en appliquant ladite première fonction à, en outre un nombre pair de sixième bytes de masquage.

Selon un mode de réalisation, l'ordre d'application de ladite première fonction est différent pour chacun desdits premiers bytes.

Selon un mode de réalisation, l'ordre d'application de ladite première fonction est différent à chaque mise en oeuvre dudit procédé.

Selon un mode de réalisation, lesdits première et deuxième clés sont des mots binaires de 128 bits, 192 bits, ou 256 bits.

Un autre mode de réalisation prévoit un procédé de mise en oeuvre d'un algorithme de chiffrement de données utilisant le procédé décrit précédemment.

Un autre mode de réalisation prévoit un dispositif de chiffrement de données adapté à mettre en oeuvre le procédé décrit précédemment.

Un autre mode de réalisation prévoit un produit programme d'ordinateur comprenant des instructions de code de programme enregistré sur un support utilisable dans un ordinateur, comprenant des moyens de programmation lisibles par ordinateur pour effectuer le procédé décrit précédemment, lorsque ledit programme fonctionne sur un ordinateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un dispositif électronique ;
la figure 2 représente, sous forme de blocs, la mise en oeuvre d'un algorithme de chiffrement ;
la figure 3 représente, sous forme de blocs, la mise en oeuvre d'une opération de dérivation de clé ;
la figure 4 représente, sous forme de blocs, un mode de mise en oeuvre d'une opération de dérivation de clé ;
la figure 5 représente, sous forme de blocs, un autre mode de mise en oeuvre d'une opération de dérivation de clé ;
la figure 6 représente, sous forme de blocs, un autre mode de mise en oeuvre d'une opération de dérivation de clé ; et
la figure 7 représente, sous forme de blocs, un autre mode de mise en oeuvre d'une opération de dérivation de clé.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

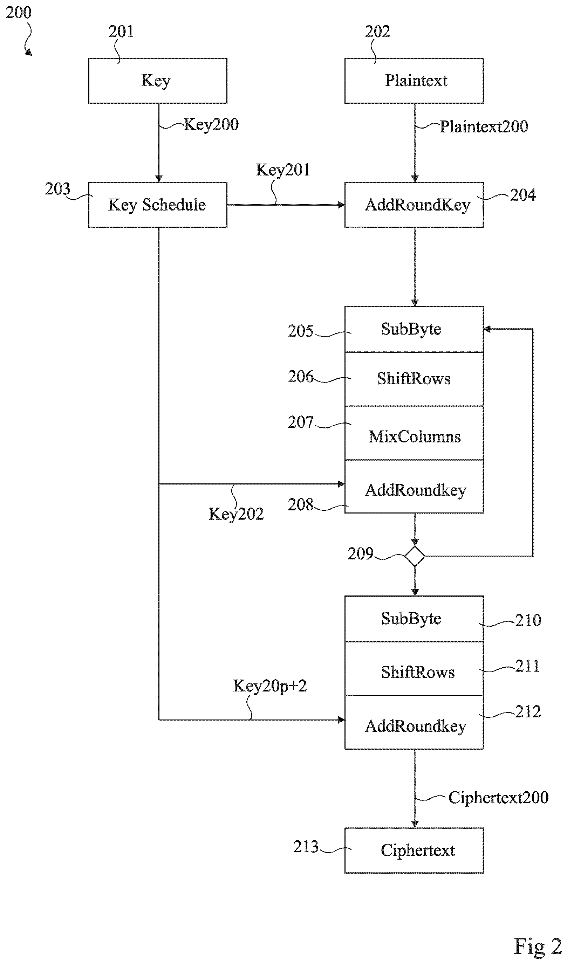

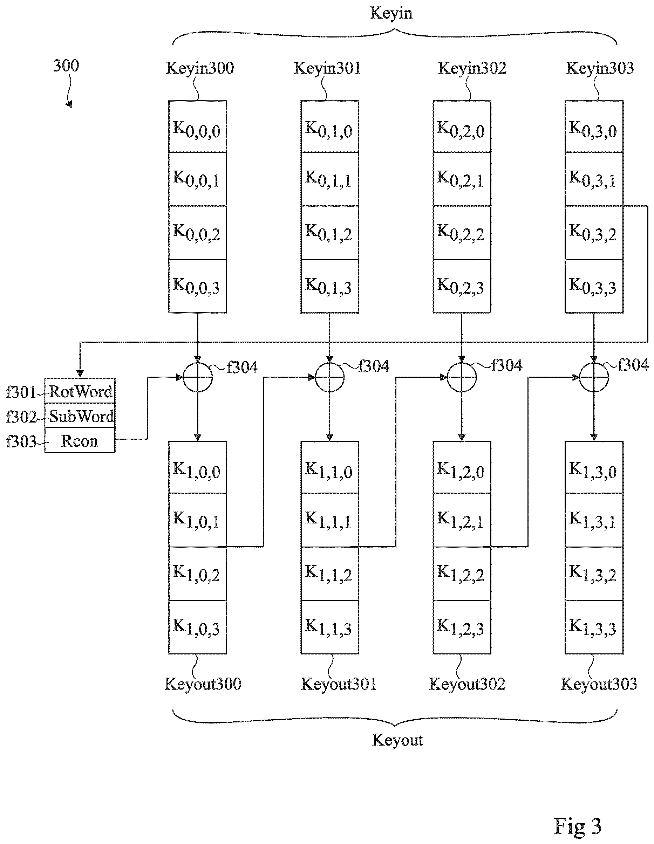

Les modes de réalisation décrits ci-après concernent la cryptographie et l'application d'algorithmes de chiffrement à des données secrètes ou sensibles. On appelle ici des données secrètes ou sensibles des données dont le contenu n'est pas destiné à être public, et dont l'accès est restreint à un nombre contrôlé d'utilisateurs. Les modes de réalisation décrits ci-après se rapportent plus particulièrement à la mise d'un algorithme de chiffrement du type de l'algorithme appelé Advanced Encryption Standard (AES) qui est un algorithme de chiffrement par tour. Le fonctionnement général de l'AES est décrit en relation avec les figures 2 et 3.

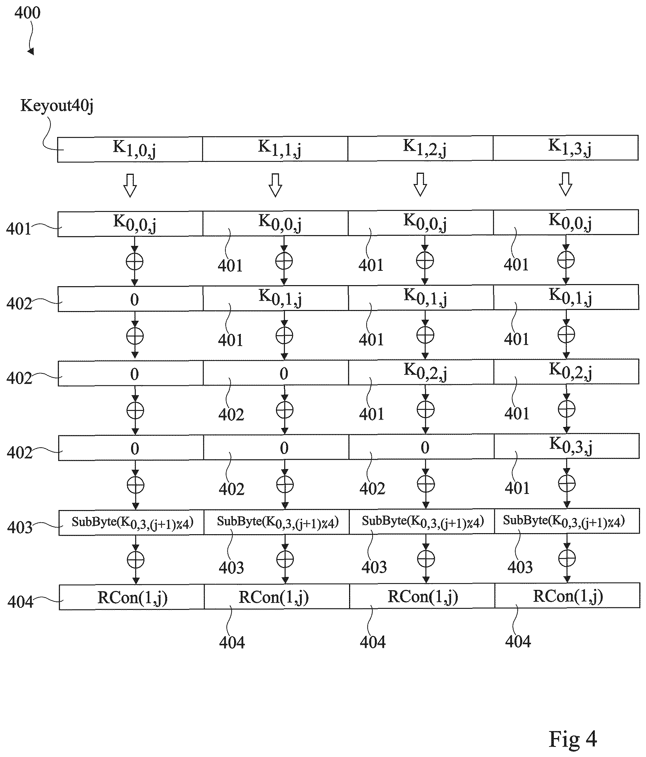

Il existe aujourd'hui différents types d'attaque malveillantes permettant d'avoir accès à des données secrètes ou sensibles pendant la mise en œuvre d'un algorithme de chiffrement. Parmi ces attaques, les attaques par canaux cachés et les attaques par injection de fautes sont tout particulièrement utilisés. Pour déjouer ces attaques, il convient de rendre la mise en oeuvre de l'algorithme de chiffrement de plus en plus difficile à analyser, et c'est ce que se proposent de faire les modes de réalisation décrits ci-après. En effet, ces modes de réalisation concernent, plus particulièrement, une mise en oeuvre plus sécurisée d'une opération de dérivation de clé utilisée pendant la mise en oeuvre d'un algorithme de chiffrement comme l'AES. Cette mise en oeuvre est basée sur une gestion en ligne des bytes de données constituant les clés, et non en colonne comme la gestion classique de ces bytes. Différentes variantes de cette mise en oeuvre sont décrites en relation avec les figures 4 à 7.

De plus, les modes de réalisation décrits ci-dessus sont particulièrement adaptés pour être utilisés dans tout type de marchés industriels où un chiffrement de données est nécessaire. Plus particulièrement, un tel procédé de chiffrement de données peut être destiné à :
- l'industrie automobile, par exemple dans le domaine de l'électrification automobile ou dans le domaine des systèmes avancés d'aide à la conduite (Advanced Driver Assistance Systems - ADAS) ;
- l'industrie industrielle, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;
- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

Dans la suite de la description, un byte représente un octet, c'est-à-dire une donnée comportant huit (8) bits.

De plus, dans la suite de la description, lorsqu'une donnée est représentée sous forme matricielle, on appelle rang d'une ligne le numéro associée à cette ligne, et rang d'une colonne le numéro associé à cette colonne. Ce rang est compris entre zéro et le nombre de lignes ou de colonnes retranché de un que comprend la matrice.

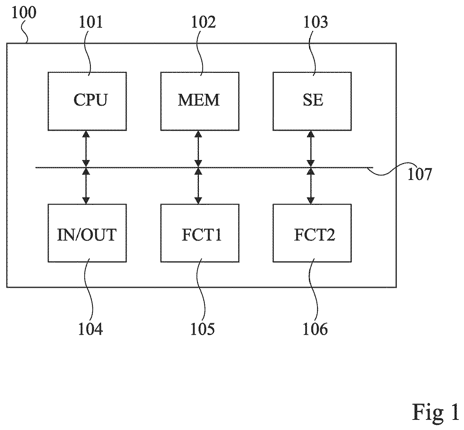

La figure 1 est un schéma bloc représentant, très schématiquement, une architecture d'un exemple d'un dispositif électronique 100 adapté à mettre en oeuvre un algorithme de chiffrement de données.

Le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 peut être adapté à mettre en oeuvre un algorithme de chiffrement de données.

Le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 est adaptée à stocker différents types de données. Selon un exemple, certaines des mémoires 102 peuvent être adaptées à stocker des données chiffrées et/ou des clés de chiffrement.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 est adapté à mettre en oeuvre un procédé de chiffrement de données utilisant un algorithme de chiffrement.

Le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre adaptés à mettre en oeuvre un affichage de données, par exemple, un écran d'affichage.

Le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesure, des circuits de conversion de données, etc. Selon un mode de réalisation, les circuits 105 et 106 peuvent comprendre un circuit adapté à mettre en oeuvre un algorithme de chiffrement de données.

Le dispositif électronique 100 comprend, en outre, un ou plusieurs bus de données 107 adaptés à transférer des données entre ses différents composants.

Selon un exemple particulier, le dispositif électronique 100 est adapté à mettre en oeuvre des programmes informatiques, et en particulier un programme informatique permettant de mettre en oeuvre un procédé de communication sans fil, par exemple un programme informatique permettant de mettre en oeuvre un algorithme de chiffrement de données.

Plus précisément, le dispositif électronique 100 est adapté à mettre en oeuvre au moins un produit programme d'ordinateur comprenant des instructions de code de programme enregistré sur un support utilisable dans un ordinateur, comprenant des moyens de programmation lisibles par ordinateur pour mettre en oeuvre l'algorithme de chiffrement de données lorsque ledit programme fonctionne sur un ordinateur.

La figure 2 est un schéma bloc illustrant la mise en oeuvre d'un algorithme de chiffrement de données 200.

Selon un exemple, l'algorithme de chiffrement de données 200 est un algorithme du type de l'algorithme appelé Advanced Encryption Standard (AES), ou AES. Selon un exemple préféré, l'algorithme 200 est l'AES. L'algorithme 200 est un algorithme par tour, c'est-à-dire un algorithme qui comprend un certain nombre d'étapes qui sont exécutées plusieurs fois de façon successive.

L'algorithme 200 démarre par deux étapes 201 (Key) et 202 (Plaintext) parallèle de génération et/ou de fourniture de données nécessaires à l'application de l'algorithme 200.

Plus particulièrement, à l'étape 201, une clé de chiffrement Key200 est générée ou récupérée. Selon un exemple, la clé Key200 est formé d'un nombre N de bytes, N étant un entier, disposé sous forme de matrice, c'est-à-dire sous forme de lignes et de colonnes. Selon un exemple préféré, N est égal à 128, mais peut aussi être égal à 192 ou à 256.

A l'étape 202, la donnée Plaintext200 à chiffrer est fournie à l'algorithme 200. Selon un exemple, la donnée Plaintext200 est mise en conformité avec un format adapté à l'algorithme 200. Pour cela, des opérations de remplissage (Padding) peuvent être mises en oeuvre.

A une étape 203 (Keyschedule), consécutive à l'étape 201, la clé Key200 est dérivée. Autrement dit, l'étape 203 est une étape de dérivation de clé qui prend en entrée une première clé, ici la clé Key200, et fournit en sortie une deuxième clé qui a le même format que la clé d'entrée. Selon un exemple, l'étape 203 peut être mise en oeuvre de façon itérative et fournir plusieurs clés dérivées. Selon un exemple, la fonction de dérivation de clé mise en oeuvre à l'étape 203 peut être mise en oeuvre à nouveau à chaque tour de l'algorithme 200 pour fournir une nouvelle clé à partir de la clé obtenue au tour précédent. Au premier tour de l'algorithme 200, l'étape 203 fournit une clé dérivée Key201. Plus particulièrement, l'opération 203 est décrite plus en détail en relation avec la figure 3.

A une étape 204 (AddRoundKey), consécutive aux étapes 202 et 203, la donnée à chiffrer Plaintext200 est chiffrée une première fois en utilisant la clé dérivée Key201.

A une étape 205 (SubByte), consécutive à l'étape 204, une fonction de substitution est appliquée à la donnée obtenue à l'étape précédente. Une telle fonction de substitution est bien connue de la personne du métier de la cryptographie.

A une étape 206 (ShiftRows), consécutive à l'étape 205, une fonction de décalage de lignes est appliquée à la donnée obtenue à l'étape précédente. Une telle fonction de décalage de lignes est bien connue de la personne du métier de la cryptographie.

A une étape 207 (MixColumns), consécutive à l'étape 206, une fonction de mélange de colonne est appliquée à la donnée obtenue à l'étape précédente. Une telle fonction de mélange de colonne est bien connue de la personne du métier de la cryptographie.

A une étape 208 (AddRoundKey), consécutive à l'étape 207, la donnée obtenue à l'étape précédente est chiffrée en utilisant une nouvelle clé dérivée Key202 fournie par une nouvelle mise en oeuvre de l'étape 203.

Les étapes 205 à 208 forment un tour de l'algorithme 200. Selon un exemple, l'algorithme 200 est mis en oeuvre p fois, p étant un entier.

A une étape 209, consécutive à l'étape 208, il est vérifié si le nombre de tours est inférieur à p. S'il l'est, alors l'étape suivante est l'étape 205, sinon l'étape suivante est une étape 210.

A une étape 210 (SubByte), consécutive à l'étape 209, la fonction de substitution de l'étape 205 est appliquée à la donnée obtenue à l'étape précédente.

A une étape 211 (ShiftRows), consécutive à l'étape 210, la fonction de mélange de ligne de l'étape 206 est appliquée à la donnée obtenue à l'étape précédente.

A une étape 212 (AddRoundKey), consécutive à l'étape 211, la donnée obtenue à l'état précédent est chiffrée en utilisant une dernière clé dérivée Key20p+2 fournie par une nouvelle mise en oeuvre de l'étape 203.

Les étapes 210 à 212 forment le dernier tour de l'algorithme 200.

A une étape finale 213 (Ciphertext), l'algorithme 200 peut fournir la donnée chiffrée Ciphertext200.

La figure 3 est un schéma bloc illustrant une mise en oeuvre classique d'une opération 300 de dérivation de clé d'un algorithme de chiffrement de données.

Selon un exemple, l'opération 300 est du type de l'opération mise en oeuvre à l'étape 203 de l'algorithme 200 décrit en relation avec la figure 2.

Dans l'exemple illustré en figure 3, l'opération 300 est adapté à recevoir, en entrée, une clé de chiffrement d'entrée Keyin de 128 bits, soit 16 bytes, et à fournir, en sortie, une clé de chiffrement de sortie Keyout de 128 bits, soit 16 bytes. Il est à la portée de la personne du métier d'adapter la description de l'opération 300 au traitement d'une clé de 192 ou 256 bits.

Pour être traitée par l'opération 300, la clé d'entrée Keyin est représentée sous forme matricielle. Autrement dit, la clé d'entrée Keyin peut être donnée par la formule mathématique suivante : $Keyin = \left(\begin{matrix}{K}_{0 , 0 , 0} & {K}_{0 , 1 , 0} & {K}_{0 , 2 , 0} & {K}_{0 , 3 , 0} \\ {K}_{0 , 0 , 1} & {K}_{0 , 1 , 1} & {K}_{0 , 2 , 1} & {K}_{0 , 3 , 1} \\ {K}_{0 , 0 , 2} & {K}_{0 , 1 , 2} & {K}_{0 , 2 , 3} & {K}_{0 , 3 , 2} \\ {K}_{0 , 0 , 3} & {K}_{0 , 1 , 3} & {K}_{0 , 2 , 4} & {K}_{0 , 3 , 3}\end{matrix}\right)$

La clé de sortie Keyout est également représentée sous forme matricielle. Autrement dit, la clé de sortie Keyout peut être donnée par la formule mathématique suivante : $Keyout = \left(\begin{matrix}{K}_{1 , 0 , 0} & {K}_{1 , 1 , 0} & {K}_{1 , 2 , 0} & {K}_{1 , 3 , 0} \\ {K}_{1 , 0 , 1} & {K}_{1 , 1 , 1} & {K}_{1 , 2 , 1} & {K}_{1 , 3 , 1} \\ {K}_{1 , 0 , 2} & {K}_{1 , 1 , 2} & {K}_{1 , 2 , 3} & {K}_{1 , 3 , 2} \\ {K}_{1 , 0 , 3} & {K}_{1 , 1 , 3} & {K}_{1 , 2 , 4} & {K}_{1 , 3 , 3}\end{matrix}\right)$

Pour mettre en oeuvre l'opération de dérivation de clé, la clé d'entrée Keyin est traitée par colonne de bytes. Autrement dit, des fonctions logiques et mathématiques sont appliquées aux bytes des colonnes de la clé Keyin. Quatre fonctions sont utilisées :
- une fonction f301 (RotWord) de rotation de mot qui permet de décaler les bytes de une ou plusieurs positions dans la colonne, de préférence de une position vers le haut ;
- une fonction f302 (Subword) de substitution de mot, du type de la fonction mise en oeuvre pendant l'étape 205 décrite en relation avec la figure 2 ;
- une fonction f303 (Rcon) de génération d'un byte considéré comme un byte constant, aussi appelé byte constant de rang ; et
- une fonction f304 représentant une fonction logique de type OU EXCLUSIF.

Grâce à l'application de l'opération, les bytes de la première colonne Keyout300 de la clé de sortie Keyout peuvent également être donnés par les formules mathématiques suivantes : $Keyout 300 = \left\{\begin{matrix}{K}_{1 , 0 , 0} = {K}_{0 , 0 , 0} xor SubByte \left({K}_{0 , 3 , 1}\right) xor Rcon \left(1\right) \\ {K}_{1 , 0 , 1} = {K}_{0 , 0 , 1} xor SubByte \left({K}_{0 , 3 , 2}\right) \\ {K}_{1 , 0 , 2} = {K}_{0 , 0 , 2} xor SubByte \left({K}_{0 , 3 , 3}\right) \\ {K}_{1 , 0 , 3} = {K}_{0 , 0 , 3} xor SubByte \left({K}_{0 , 3 , 0}\right)\end{matrix}\right.$ dans lesquelles :
- xor représente la fonction logique OU EXCLUSIF ;
- SubByte représente la fonction f302 ; et
- Rcon(1) représente la fonction f303.

La personne du métier saura déterminer à partir de ces formules, les formules permettant de définir les bytes des autres colonnes Keyout301, Keyout302 et Keyout303.

Un inconvénient d'un traitement de cette opération 300 par colonne est qu'à chaque calcul d'un coefficient de la clé de sortie Keyout, deux coefficients de la clé d'entrée Keyin sont utilisés et peuvent être rendus accessibles par utilisation d'une attaque malveillantes.

La figure 4 est un schéma bloc illustrant un mode de mise en oeuvre d'une opération 400 de dérivation de clé d'un algorithme de chiffrement de données.

Selon un exemple, l'opération 400 est du type de l'opération mise en oeuvre à l'étape 203 de l'algorithme 200 décrit en relation avec la figure 2 et du type de l'opération 300 décrite en relation avec la figure 3.

Dans l'exemple illustré en figure 4, et comme l'opération 300 de la figure 3, l'opération 400 est adaptée à recevoir, en entrée, la clé de chiffrement d'entrée Keyin de 128 bits, soit 16 bytes, de la figure 3 et à fournir, en sortie, la clé de chiffrement de sortie Keyout de 128 bits, soit 16 bytes de la figure 3. Il est à la portée de la personne du métier d'adaptée la description de l'opération 300 au traitement d'une clé de 192 ou 256 bits.

Contrairement à l'opération 300 de la figure 3, dans l'opération 400, la clé d'entrée Keyin est traitée par ligne et non par colonne. Autrement dit, l'opération est mise en oeuvre en considérant les bytes de la clé d'entrée Keyin ligne de bytes par ligne de bytes.

Par l'application de l'opération 400, les bytes d'une ligne Keyout40j de rang j, j étant compris entre 0 et 3, 0 et 3 étant inclus, de la clé de sortie Keyout sont donnés par les formules mathématiques suivantes : $Keyout 40 j = \left\{\begin{matrix}{K}_{1 , 0 , j} = {K}_{0 , 0 , j} xor SubByte \left({K}_{0 , 3 , \left(j+1\right) % 4}\right) xor Rcon \left(1\right) \\ {K}_{1 , 1 , j} = {K}_{0 , 1 , j} xor {K}_{1 , 0 , j} \\ {K}_{1 , 2 , j} = {K}_{0 , 2 , j} xor {K}_{1 , 1 , j} \\ {K}_{1 , 3 , j} = {K}_{0 , 3 , j} xor {K}_{1 , 2 , j}\end{matrix}\right.$ dans lesquelles :
- xor représente la fonction logique OU EXCLUSIF ;
- SubByte représente la fonction f302 de la figure 3 ; et
- Rcon(1) représente la fonction f303 de la figure 3.

Ces dernières formules peuvent aussi être exprimées en n'utilisant que des bytes de la clé d'entrée Keyin : $\begin{matrix}Keyout 40 j \\ = \left\{\begin{matrix}{K}_{1 , 0 , j} = {K}_{0 , 0 , j} xor SubByte \left({K}_{0 , 3 , \left(j+1\right) % 4}\right) xor Rcon \left(1\right) \\ {K}_{1 , 1 , j} = {K}_{0 , 1 , j} xor {K}_{0 , 0 , j} xor SubByte \left({K}_{0 , 3 , \left(j+1\right) % 4}\right) xor Rcon \left(1\right) \\ {K}_{1 , 2 , j} = {K}_{0 , 2 , j} xor {K}_{0 , 1 , j} xor {K}_{0 , 0 , j} xor SubByte \left({K}_{0 , 3 , \left(j+1\right) % 4}\right) xor Rcon \left(1\right) \\ {K}_{1 , 3 , j} = {K}_{0 , 3 , j} xor {K}_{0 , 2 , j} xor {K}_{0 , 1 , j} xor {K}_{0 , 0 , j} xor SubByte \left({K}_{0 , 3 , \left(j+1\right) % 4}\right) xor Rcon \left(1\right)\end{matrix}\right.\end{matrix}$

Il est donc intéressant de remarquer qu'avec un traitement par lignes, et pour le calcul des bytes d'une ligne de la clé de sortie, l'opération de dérivation 400 ne manipule que les bytes d'une ligne de la clé d'entrée Keyin et un seul byte d'une autre ligne de la clé d'entrée Keyin. Lors d'un traitement par colonnes, le calcul des bytes d'une colonne utilise tous les bytes de la clé d'entrée Keyin. C'est un premier avantage d'un traitement par ligne. En effet, il permet d'utiliser moins de bytes de la clé d'entrée et a donc moins de possibilités de laisser fuiter la clé d'entrée au complet.

De plus, dans l'opération 400, les calculs des bytes d'une même ligne peuvent tous être exécutés de façon parallèle. Ce cas est représenté en figure 4. La mise en oeuvre est divisée, pour chaque byte d'une ligne de la clé Keyout, en i+2 applications de la fonction OU EXCLUSIF, i étant un entier représentant le nombre de ligne des clés d'entrée Keyin et de sortie Keyout. En figure 4, cette mise en oeuvre est divisée en 6 applications de la fonction OU EXCLUSIF pour chaque byte *K*_{1,0,*j*} à *K*_{1,3,*j*}. Cela permet d'harmoniser le nombre d'opérations réalisées et de rendre la mise en oeuvre de l'opération 400 plus sécurisée. En effet, il pourrait être détectable de n'appliquer la fonction OU EXCLUSIF que trois fois pour le byte *K*_{1,0,*j*} alors que, par comparaison, le byte *K*_{1,3,*j*} requiert six applications de cette fonction.

Selon une variante de réalisation, dans l'opération 400, les calculs des bytes d'une même ligne peuvent tous être exécutés dans une ordre aléatoire.

Ainsi, de façon plus particulière, la mise en oeuvre de l'opération 400 illustrée en figure 4, comprend les étapes successives suivantes :
- une ou plusieurs étapes 401 d'application de la fonction OU EXCLUSIF à un byte de la clé d'entrée Keyin ;
- une ou plusieurs étapes 402 de remplissage qui correspondent à une ou plusieurs étapes d'application de la fonction OU EXCLUSIF à un byte nul, si besoin ;
- une étape 403 d'application de la fonction OU EXCLUSIF à un byte correspondant à l'application d'une fonction de substitution (comme la fonction f302 de la figure 3) à un byte de la clé d'entrée Keyin ; et
- une étape 404 d'application de la fonction OU EXCLUSIF à un byte correspondant à un byte constant de rang obtenu grâce à l'application d'une fonction de génération (comme la fonction f303 de la figure 3).

Le nombre d'étapes 401 et 402 est calculé de façon à ce que, pour une même ligne, tous les bytes soit obtenus par le même nombre d'étapes.

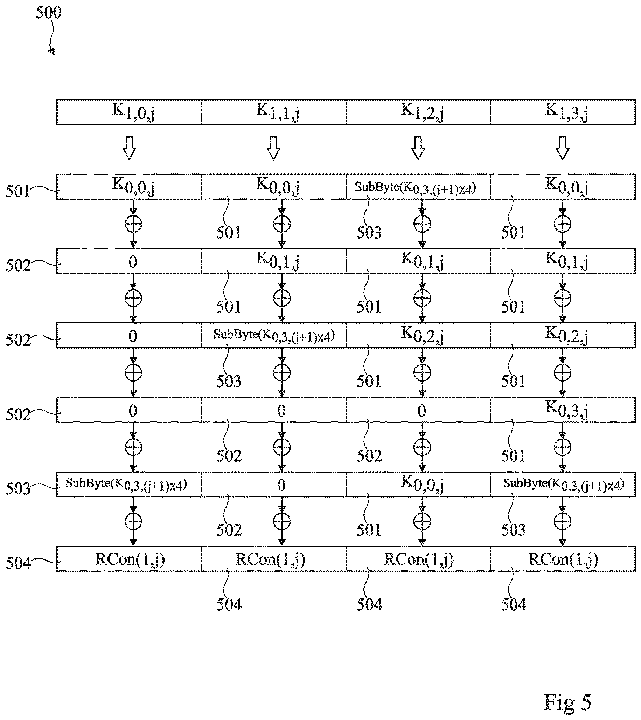

La figure 5 est un schéma bloc illustrant un mode de mise en oeuvre d'une opération 500 de dérivation de clé d'un algorithme de chiffrement de données.

L'opération 500 est similaire à l'opération 400 décrite en relation avec la figure 4. Les éléments communs aux opérations 400 et 500 ne sont pas décrits de nouveau ici en détails. En revanche, les différences entre les opérations 400 et 500 sont mises en exergue.

Comme l'opération 400, l'opération 500 est adaptée à recevoir, en entrée, la clé de chiffrement d'entrée Keyin de 128 bits, soit 16 bytes, de la figure 3 et à fournir, en sortie, la clé de chiffrement de sortie Keyout de 128 bits, soit 16 bytes de la figure 3.

Comme l'opération 400, l'opération 500 consiste en un traitement par ligne de l'opération de dérivation de clé mise en oeuvre à l'étape 203 de l'algorithme 200 décrit en relation avec la figure 2. L'opération 500 est découpée en plusieurs applications de la fonction OU EXCLUSIF. Ainsi, de façon plus particulière, la mise en oeuvre de l'opération 500 illustrée en figure 5, comprend les étapes successives suivantes :
- une ou plusieurs étapes 501 d'application de la fonction OU EXCLUSIF à un byte de la clé d'entrée Keyin, du type de l'étape 401 de l'opération 400 ;
- une ou plusieurs étapes 502 de remplissage qui correspondent à une ou plusieurs étapes d'application de la fonction OU EXCLUSIF à un byte nul, si besoin, du type de l'étape 402 de l'opération 400 ;
- une étape 503 d'application de la fonction OU EXCLUSIF à un byte correspondant à l'application d'une fonction de substitution (comme la fonction f302 de la figure 3) à un byte de la clé d'entrée Keyin, du type de l'étape 403 de l'opération 400 ; et
- une étape 504 d'application de la fonction OU EXCLUSIF à un byte correspondant à un byte constant de rang obtenu grâce à l'application d'une fonction de génération (comme la fonction f303 de la figure 3), du type de l'étape 404 de l'opération 400.

A la différence de l'opération 400, dans l'opération 500, l'ordre de mise en oeuvre des étapes 501, 502 (le cas échéant), 503 et 504 peut être différent pour chaque byte d'une même ligne.

Selon un exemple, l'ordre de mise en oeuvre des étapes 501, 502 (le cas échéant), 503 et 504 peut être différent à chaque mise en oeuvre de l'opération 500.

Un avantage de ce mode de mise en oeuvre est d'améliorer la robustesse de l'opération 500.

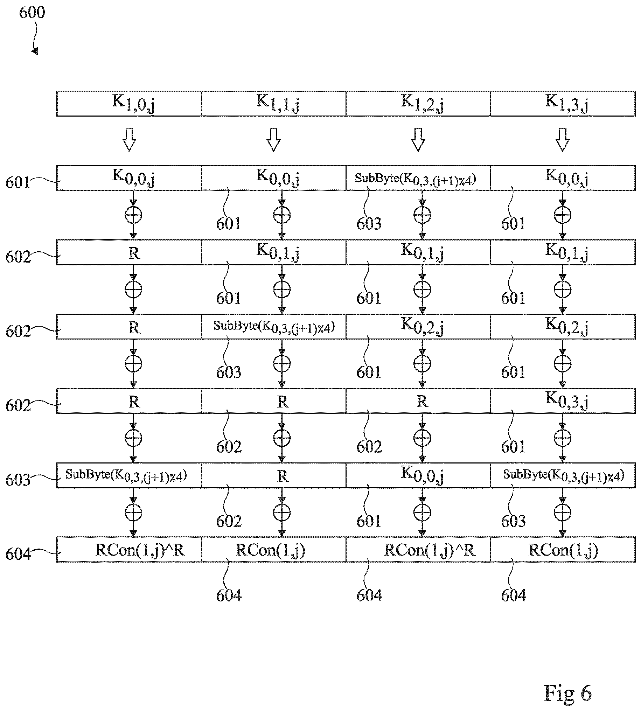

La figure 6 est un schéma bloc illustrant un mode de mise en oeuvre d'une opération 600 de dérivation de clé d'un algorithme de chiffrement de données.

L'opération 600 est similaire à l'opération 400 décrite en relation avec la figure 4 et à l'opération 500 décrite en relation avec la figure 5. Les éléments communs aux opérations 400, 500 et 600 ne sont pas décrits de nouveau ici en détails. En revanche, les différences entre les opérations 400, 500 et 600 sont mises en exergue.

Comme les opérations 400 et 500, l'opération 600 est adaptée à recevoir, en entrée, la clé de chiffrement d'entrée Keyin de 128 bits, soit 16 bytes, de la figure 3 et à fournir, en sortie, la clé de chiffrement de sortie Keyout de 128 bits, soit 16 bytes de la figure 3.

Comme les opérations 400 et 500, l'opération 600 consiste en un traitement par ligne de l'opération de dérivation de clé mise en oeuvre à l'étape 203 de l'algorithme 200 décrit en relation avec la figure 2. L'opération 600 est découpée en plusieurs applications de la fonction OU EXCLUSIF. Ainsi, de façon plus particulière, la mise en oeuvre de l'opération 600 illustrée en figure 6, comprend les étapes successives suivantes :
- une ou plusieurs étapes 601 d'application de la fonction OU EXCLUSIF à un byte de la clé d'entrée Keyin, du type de l'étape 401 de l'opération 400 ;
- une ou plusieurs étapes 602 similaire à l'étape 402 de l'opération 400 ;
- une étape 603 d'application de la fonction OU EXCLUSIF à un byte correspondant à l'application d'une fonction de substitution (comme la fonction f302 de la figure 3) à un byte de la clé d'entrée Keyin, du type de l'étape 403 de l'opération 400 ; et
- une étape 604 d'application de la fonction OU EXCLUSIF à un byte correspondant à un byte constant de rang obtenu grâce à l'application d'une fonction de génération (comme la fonction f303 de la figure 3), du type de l'étape 404 de l'opération 400.

Comme l'opération 500, dans l'opération 600, l'ordre de mise en oeuvre des étapes 601, 602 (le cas échéant), 603 et 604 peut être différent pour chaque byte d'une même ligne.

A la différence des opérations 400 et 500, les étapes 602 ne sont pas des étapes d'application de la fonction OU EXCLUSIF à un byte nul, mais à un byte R représentant une donnée de masquage, par exemple une donnée de masquage générée de manière aléatoire.

Selon un exemple, lorsque le nombre d'étapes 602 est pair, toutes les étapes 602 représentent toute l'application de la fonction OU EXCLUSIF au byte R. Cependant, lorsque le nombre d'étapes 602 est impair, le byte R doit être impérativement utilisé dans un nombre impair des autres étapes de l'opération 600 comme byte de masquage.

Un avantage de ce mode de mise en oeuvre est d'améliorer la robustesse de l'opération 600.

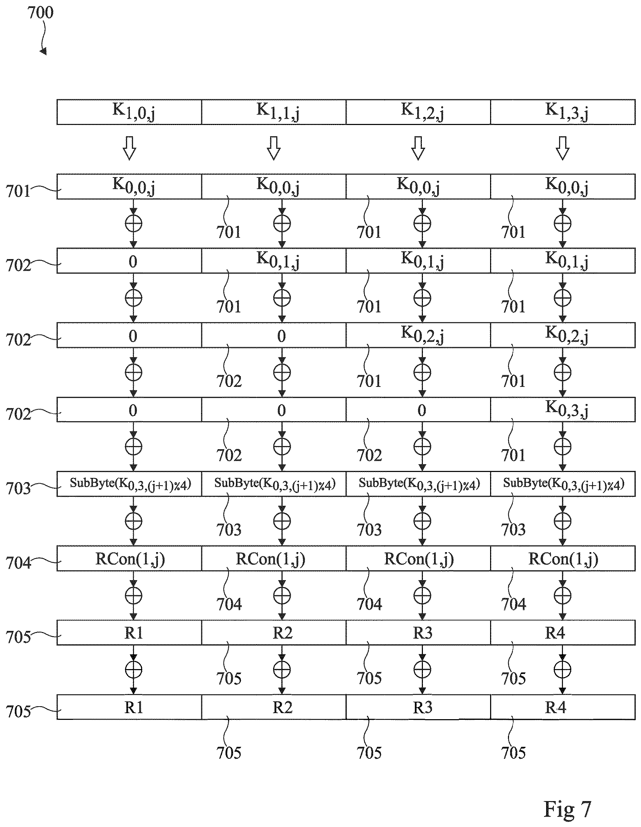

La figure 7 est un schéma bloc illustrant un mode de mise en oeuvre d'une opération 700 de dérivation de clé d'un algorithme de chiffrement de données.

L'opération 700 est similaire à l'opération 400 décrite en relation avec la figure 4. Les éléments communs aux opérations 400 et 700 ne sont pas décrits de nouveau ici en détails. En revanche, les différences entre les opérations 400 et 700 sont mises en exergue.

Comme l'opération 400, l'opération 700 est adaptée à recevoir, en entrée, la clé de chiffrement d'entrée Keyin de 128 bits, soit 16 bytes, de la figure 3 et à fournir, en sortie, la clé de chiffrement de sortie Keyout de 128 bits, soit 16 bytes de la figure 3.

Comme l'opération 400, l'opération 700 consiste en un traitement par ligne de l'opération de dérivation de clé mise en oeuvre à l'étape 203 de l'algorithme 200 décrit en relation avec la figure 2. L'opération 700 est découpée en plusieurs applications de la fonction OU EXCLUSIF. Ainsi, de façon plus particulière, la mise en oeuvre de l'opération 700 illustrée en figure 5, comprend les étapes successives suivantes :
- une ou plusieurs étapes 701 d'application de la fonction OU EXCLUSIF à un byte de la clé d'entrée Keyin, du type de l'étape 401 de l'opération 400 ;
- une ou plusieurs étapes 702 de remplissage qui correspondent à une ou plusieurs étapes d'application de la fonction OU EXCLUSIF à un byte nul, si besoin, du type de l'étape 402 de l'opération 400 ;
- une étape 703 d'application de la fonction OU EXCLUSIF à un byte correspondant à l'application d'une fonction de substitution (comme la fonction f302 de la figure 3) à un byte de la clé d'entrée Keyin, du type de l'étape 403 de l'opération 400 ; et
- une étape 704 d'application de la fonction OU EXCLUSIF à un byte correspondant à un byte constant de rang obtenu grâce à l'application d'une fonction de génération (comme la fonction f303 de la figure 3), du type de l'étape 404 de l'opération 400.

A la différence de l'opération 400, l'opération 700 comprend en autre des étapes 705 d'application de la fonction OU EXCLUSIF à un ou plusieurs bytes R1, R2 de masquage. Selon un exemple, le ou les bytes R1, R2 sont adaptés à représenter des données obtenues de façon aléatoires. Selon un exemple, l'opération comprend une nombre pair d'étapes 705 appliqué à chaque byte de masquage.

Un avantage de ce mode de mise en oeuvre est d'améliorer la robustesse de l'opération 700.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de mise en oeuvre des figures 4 à 7 peuvent tous être combinés.

Enfin, la mise en oeuvre pratique des modes de réalisation et variantes décrits est à la portée de la personne du métier à partir des indications fonctionnelles données ci-dessus.

## Revendications

1. Procédé de mise en oeuvre d'une opération de dérivation (400 ; 500 ; 600 ; 700) de clé d'un algorithme de chiffrement (200) adaptée à recevoir une première clé (Keyin) et à fournir une deuxième clé (Keyout), lesdites premières et deuxièmes clés (Keyin, Keyout) comprenant chacune un nombre N de bytes disposés sous forme matricielle, dans laquelle des premiers bytes d'une ligne de bytes d'un premier rang de ladite deuxième clé est calculée en utilisant :
- des deuxièmes bytes d'une ligne de bytes du premier rang de ladite première clé (Keyin) ; et
- un seul troisième byte d'une ligne d'un deuxième rang, différent du premier rang, de ladite première clé (Keyin).

2. Dispositif (100) de mise en oeuvre du procédé de mise en oeuvre d'une opération de dérivation (400 ; 500 ; 600 ; 700) de clé d'un algorithme de chiffrement (100) adaptée à recevoir une première clé (Keyin) et à fournir une deuxième clé (Keyout), lesdites premières et deuxièmes clés (Keyin, Keyout) comprenant chacune un nombre N de bytes disposés sous forme matricielle, dans laquelle des premiers bytes d'une ligne de bytes d'un premier rang de ladite deuxième clé est calculée en utilisant :
- des deuxièmes bytes d'une ligne de bytes du premier rang de ladite première clé (Keyin) ; et
- un seul troisième byte d'une ligne d'un deuxième rang, différent du premier rang, de ladite première clé (Keyin).

3. Procédé selon la revendication 1, ou dispositif selon la revendication 2, dans lequel ledit algorithme de chiffrement de données (200) est de type Advanced Encryption Standard.

4. Procédé selon la revendication 1 ou 3, ou dispositif selon la revendication 2 ou 3, dans lequel ledit troisième byte est le dernier byte de la ligne de byte du premier rang incrémenté de un de ladite première clé (Keyin).

5. Procédé l'une quelconque des revendications 1, 3 ou 4, ou dispositif selon l'une quelconque des revendications 2 à 4, dans lequel chacun desdits premiers bytes est obtenu en appliquant une première fonction logique de type OU EXCLUSIF (f304) à un ou plusieurs desdits deuxièmes bytes, à un quatrième byte dépendant dudit troisième byte, et à un cinquième byte.

6. Procédé ou dispositif selon la revendication 5, dans lequel ledit quatrième byte est obtenu en appliquant une fonction de substitution (f302).

7. Procédé ou dispositif selon la revendication 5 ou 6, dans lequel ledit cinquième byte est un byte constant de rang.

8. Procédé ou dispositif selon l'une quelconque des revendications 5 à 7, dans lequel chacun desdits premiers bytes est obtenu en appliquant ladite première fonction (f304) à un même nombre de bytes.

9. Procédé ou dispositifs selon l'une quelconque des revendications 5 à 8, dans lequel chacun desdits premiers bytes est obtenu en appliquant ladite première fonction (f304) à, en outre un nombre pair de sixième bytes de masquage.

10. Procédé ou dispositif selon l'une quelconque des revendications 5 à 9, dans lequel l'ordre d'application de ladite première fonction (f304) est différent pour chacun desdits premiers bytes.

11. Procédé ou dispositif selon l'une quelconque des revendications 5 à 10, dans lequel l'ordre d'application de ladite première fonction (f304) est différent à chaque mise en oeuvre dudit procédé.

12. Procédé l'une quelconque des revendications 1, 3 à 11, ou dispositif selon l'une quelconque des revendications 2 à 11, dans lequel lesdits première et deuxième clés (Keyin, Keyout) sont des mots binaires de 128 bits, 192 bits, ou 256 bits.

13. Procédé de mise en oeuvre d'un algorithme de chiffrement de données utilisant le procédé selon l'une quelconque des revendications 1, 3 à 12.

14. Dispositif de chiffrement de données adapté à mettre en oeuvre le procédé selon la revendication 13.

15. Produit programme d'ordinateur comprenant des instructions de code de programme enregistré sur un support utilisable dans un ordinateur, comprenant des moyens de programmation lisibles par ordinateur pour effectuer le procédé selon l'une quelconque des revendications 1, 3 à 12, lorsque ledit programme fonctionne sur un ordinateur.
